# DEMANDE DE BREVET EUROPEEN

(11) **EP 1 249 692 A1**
(43) Date de publication de la demande: **16.10.2002**
(21) Numéro de dépôt: 01420091.9
(22) Date de dépôt: 12.04.2001
(51) Int. Cl.: G01L 1/24

(54) **Dispositif à fibre optique pour la mesure de contraintes**

(71) Demandeur: Fos Sàrl, 74240 Gaillard (FR)
(72) Inventeur: Rey, Patrick, 74420 Villard (FR); Richon, Dominique, 74140 St-Cergues (FR); Trojer, Felix, 40217 Duesseldorf (DE)
(74) Mandataire: Savoye, Jean-Paul

(57) **Abrégé**

Ce dispositif à fibre optique pour la mesure de contraintes sur un élément (1) dont l'allongement élastique est supérieur à celui de la fibre optique (3) comporte un matériau (4) à faible module d'élasticité par rapport à celui de ladite fibre optique (3), interposé entre cette fibre optique (3) et ledit élément (1), au moins une première partie de ce matériau (4) étant solidaire en déformation de ladite fibre optique (3) et au moins une seconde partie de ce matériau (4), distante de la première, étant solidaire en déformation dudit élément (1).

## Description

La présente invention se rapporte à un dispositif à fibre optique pour la mesure de contraintes sur un élément dont l'allongement élastique est supérieur à celui de la fibre optique.

Il existe déjà un certain nombre de jauges de contraintes associées à une ou plusieurs fibres optiques conformées pour produire une modification de la lumière transmise à travers la fibre en fonction de la contrainte à laquelle la fibre est soumise.

Les jauges de contraintes et extensomètres à base de fibre optique ont les avantages suivants:
Grande précision de mesure: jusqu'à 1 "microstrain", c'est-à-dire 1 µm/m ;
Insensibilité aux perturbations électromagnétiques ;
Pas de dérive temporelle du capteur ;
Longue durée de vie (>20 ans) ;
Possibilité de multiplexage série et/ou parallèle.

Néanmoins, leur principal inconvénient est la limitation de la plage de mesure du fait du faible allongement élastique de la fibre optique (∼1%).

Afin d'augmenter cette limite, de nombreux travaux ont été consacrés à l'étude des fibres optiques. Le but de ces travaux étant l'obtention de fibres optiques possédant un plus grand allongement élastique. Cependant, le coût de fabrication de fibres optiques particulières est sensiblement plus élevé que celui des fibres standards.

La présente invention a pour but l'augmentation de la plage de mesure des capteurs à fibre optique utilisant des fibres optiques standards dont l'allongement élastique est de l'ordre de 1%.

A cet effet, la présente invention a pour objet un dispositif à fibre optique pour la mesure de contraintes tel que défini par la revendication 1.

Grâce au dispositif objet de l'invention, la plage de mesure peut être augmentée dans des proportions très importantes en conservant une grande précision de mesure, offrant ainsi un champ d'application considérablement élargi aux jauges de contraintes à fibre optique.

Le dessin annexé illustre, très schématiquement et à titre d'exemple, le principe de fonctionnement ainsi que des variantes d'applications de ce dispositif.
La figure 1 est une vue de côté de ce dispositif fixé à un élément dont on désire mesurer la contrainte à l'état de repos;
la figure 2 est une vue semblable à celle de la figure 1, montrant l'élément auquel le dispositif est fixé à l'état de contrainte;
la figure 3 est une vue de ce dispositif dans le cadre d'une autre application;
la figure 4 est une variante montrant l'utilisation du dispositif objet de l'invention en tant qu'extensomètre.

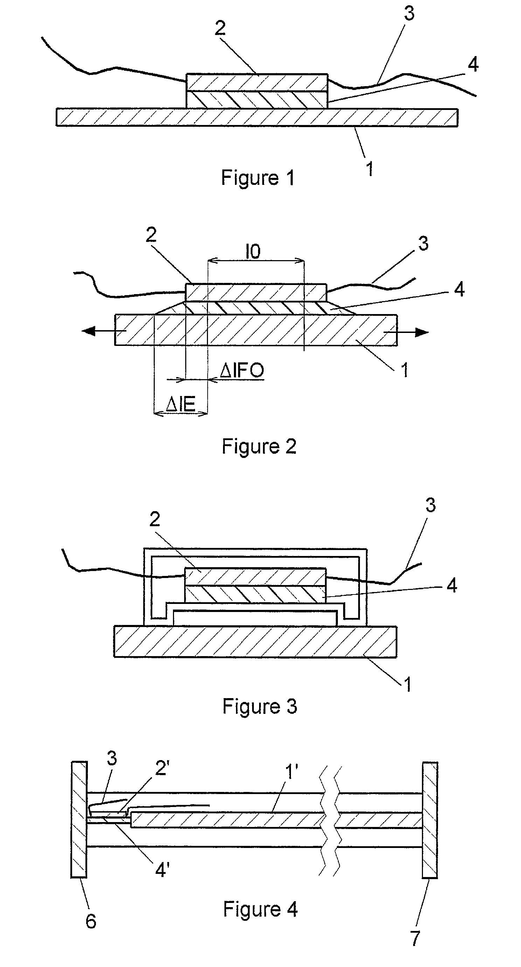

Le principe de l'invention consiste à intercaler une couche de matériau déformable entre le capteur et l'échantillon. Comme illustré par la figure 1, l'élément à mesurer 1 est relié à la jauge de contrainte 2 à fibre optique 3 par l'intermédiaire d'une couche élastiquement déformable 4. A cet effet, une face de cette couche 4 est collée à l'élément à mesurer 1, tandis que sa face opposée est collée à la jauge de contrainte 2.

Dans l'exemple illustré, la jauge de contrainte 2 est constituée par un transducteur sous forme d'une matrice dans laquelle la fibre optique 3 est noyée. Une extrémité d'entrée de cette fibre optique 3 est destinée à être reliée à un photoémetteur, et une extrémité de sortie à un photorécepteur. Avantageusement, bien que non exclusivement, cette jauge peut être du type de celle décrite dans le EP 0 984 243.

La figure 2 montre l'élément à mesurer 1 mis sous contrainte et les allongements respectifs Δl_{FO}, Δl_{E} de la jauge de contrainte 2 et de l'élément à mesurer. Cette figure montre le gradient d'allongement entre les deux faces opposées de la couche intermédiaire 4. Ceci signifie que seule une fraction de l'allongement de l'élément 1 est transmise à la fibre optique 3, la différence étant absorbée par cette couche intermédiaire 4.

La résolution et la précision de la mesure effectuée sont fonction de la résolution de la jauge de contrainte 2, exprimée en µm/m multipliée par le rapport d'allongement entre l'élément à mesurer 1 et la jauge elle-même 2. Par conséquent, il sera utile de réduire ce rapport multiplicateur en choisissant un matériau pour la couche intermédiaire 4 dont le module d'élasticité n'est pas beaucoup inférieur à celui de l'élément à mesurer.

Pour donner une valeur de la contrainte exercée sur l'élément à mesurer 1 il y aura donc lieu de connaître le rapport d'allongement entre l'élément 1 et la jauge. Ceci pourra être obtenu grâce à un étalonnage de la jauge de contrainte 2 en fonction des propriétés de la couche intermédiaire 4.

En variante (non représentée) le capteur de mesure peut être directement constitué par la fibre optique 3 elle-même, directement collée sur une des faces de la couche intermédiaire 4.

Cette couche intermédiaire 4 peut être constituée d'un assemblage de matériaux sous forme de sous-couches ayant des propriétés mécaniques (élasticité, élasticité en cisaillement...) et géométrique, notamment épaisseurs variables.

Le matériau de cette couche intermédiaire 4 sera préférentiellement composé de matériaux ayant un faible module d'élasticité en cisaillement.

Suivant les applications et la façon dont on place la couche déformable, il est possible de concevoir différents produits, notamment :
Une jauge de contrainte dans laquelle la couche déformable est directement collée sur l'échantillon à mesurer, comme illustré par les figures 1 et 2.
Un dispositif de mesure de l'allongement tel qu'illustré par la figure 3 dans laquelle la jauge de contrainte 2 est intégrée à un dispositif 5 de mesure de l'allongement.
Un extensomètre, comme illustré par la figure 4, dans lequel deux extrémités opposées de la couche intermédiaire 4' du dispositif de mesure à fibre optique 2' sont interposées entre une extrémité d'une barre 1', constituant l'élément dont on veut mesurer l'allongement et un premier point d'ancrage 6, l'autre extrémité de la barre 1' étant solidaire d'un second point d'ancrage 7, une traction étant par exemple exercée entre les deux points d'ancrage 6 et 7.

## Revendications

1. Dispositif à fibre optique pour la mesure de contraintes sur un élément (1) dont l'allongement élastique est supérieur à celui de la fibre optique (3), **caractérisé en ce qu'**un matériau (4) à faible module d'élasticité par rapport à celui de ladite fibre optique (3), est interposé entre cette fibre optique (3) et ledit élément (1), au moins une première partie de ce matériau (4) étant solidaire en déformation de ladite fibre optique (3) et au moins une seconde partie de ce matériau (4), distante de la première, étant solidaire en déformation dudit élément (1).

2. Dispositif selon la revendication 1, comprenant au moins un transducteur (2) formé d'une matrice traversée par au moins un segment de ladite fibre optique (3), ladite première partie dudit matériau (4) à faible module d'élasticité étant rendue solidaire de ladite fibre optique (3) par l'intermédiaire dudit transducteur (2).

3. Dispositif selon l'une des revendications précédentes, dans lequel ledit matériau (4) est choisi pour présenter un module d'élasticité au plus égal à celui dudit élément (1) et au moins proche de celui de cet élément (1).

4. Dispositif selon l'une des revendications précédentes, dans lequel, le module d'élasticité en cisaillement dudit matériau (4) est sensiblement plus faible que celui de la fibre optique.
